# EUROPÄISCHE PATENTSCHRIFT

(11) **EP 1 524 445 B1**
(45) Veröffentlichungstag und Bekanntmachung des Hinweises auf die Patenterteilung: **29.03.2006**
(21) Anmeldenummer: 04024163.0
(22) Anmeldetag: 11.10.2004
(51) Int. Cl.: F16D 25/08

(54) **Ansteuereinrichtung für Kupplungen in Fahrzeugen**
Clutch actuation device for use in vehicles
Dispositif de contrôle d'embrayage pour utilisation dans des véhicules

(30) Priorität: 14.10.2003 DE 10348886
(43) Veröffentlichungstag der Anmeldung: 20.04.2005
(73) Patentinhaber: HYDRAULIK-RING GMBH, 97828 Marktheidenfeld (DE)
(72) Erfinder: Wild, Andreas, 72669 Unterensingen (DE); Meyer, Roland, 72622 Nürtingen (DE)

(56) Entgegenhaltungen:
- US-A- 4 848 549
- US-A- 5 927 418

## Beschreibung

Die Erfindung betrifft eine Einrichtung für einen Antriebsstrang, umfassend eine Kupplung von Fahrzeugen, vorzugsweise von Kraftfahrzeugen, nach dem Oberbegriff des Anspruches 1.

In Fahrzeugen werden Kupplungen eingesetzt, die im Ruhezustand geschlossen sind. Um die Kupplung zu öffnen, muß äußere Energie zugeführt werden. Beim Anfahren oder bei einem Gangwechsel wird die Kupplung durch den Fahrer betätigt. Die Kupplungen in Kraftfahrzeugen sind im unbetätigten Zustand durch Federkraft geschlossen. Diese Kupplungen werden über Hebel und Zugseile, hydraulisch über auf Hebel wirkende Linearzylinder oder über direkt an der Kupplung angeordnete hydraulische Zentralausrücker betätigt. Nachteilig ist der Kraftschluß im Antriebsstrang des Kraftfahrzeuges, der ohne Eingriff in die Ansteuerung der Kupplung bestehen bleibt und zu kritischen Situationen führen kann.

Die weit verbreitete Auffassung, wie Kupplungen ausgelegt sind, spiegelt sich im Sprachgebrauch des Fachgebietes wieder. Das Glied zur Abkupplung des Antriebs vom Abtrieb wird als Ausrücker bezeichnet. Der Ausrücker rückt bei Betätigung die Eingangswelle von der Ausgangswelle. Zahlreiche Definitionen sind z. B. aus der DE 101 01 598 A1 zu entnehmen, in der dargelegt ist, dass eine Ausrückeinrichtung eine Einrichtung sei, die ein mit einer Eingangswelle gekoppeltes Bauteil und ein mit einer Ausgangswelle gekoppeltes Bauteil aufweist, welche sich relativ zueinander bewegen können und in unterschiedlichen Relativstellungen eine unterschiedliche Kraft- und Drehmomentübertragung zwischen diesen Bauteilen bewirken können.

Neben der DE 101 01 598 A1, in der elastische Module näher untersucht werden und in der eine hydraulische Kupplung mit Geber- und Nehmerzylinder beschrieben wird, seien noch die Druckschriften DE 33 26 107 A1, DE 195 47 559 A1, DE 195 47 559 A1, DE 197 36 557 C1, DE 197 50 497 A1, DE 102 42 841 A1 und US 4 687 084 erwähnt, die alle Kupplungen offenbaren, die im unbetätigten Zustand geschlossen sind und so einen Kraft- und Momentenschluss im Normalzustand der Kupplung sicherstellen. Viele der zitierten Druckschriften zeigen Federn, die einen Kupplungsschluss mittels Vorspannkraft sicherstellen, selbst bei Abrieb der Kupplungsscheiben der Reibkupplungen.

Aus der US 4 848 549 ist eine konventionelle Kupplung aus dem Rennsport bekannt, die im Normalzustand einen Kraftfluss zulässt. Erst wenn der Fahrer durch einen Betätigen des Schaltpedals die Kupplungsbetätigungsfinger der Kupplung drückt, entkuppelt die Kupplung.

Aus der US 5 927 418 ist ein möglicher Kuppplungsaufbau bekannt, der im Nebenabtriebsstrang angeordnet sein kann, um eine Pumpe, die als Hybriddruckakkumulator in der Druckschrift bezeichnet wird, anzukuppeln, wenn Bremsenergie des Fahrzeuges gewonnen werden soll.

Der Erfindung liegt die Aufgabe zugrunde, die gattungsgemäße Einrichtung so auszubilden, daß sie bei konstruktiv einfacher und kompakter Ausbildung eine zuverlässige Betätigung der Kupplung ermöglicht. Hierbei soll eine sichere Kraft- bzw. Momentenunterbrechung im Antriebsstrang des Fahrzeuges durch die Kupplung sichergestellt werden.

Diese Aufgabe wird bei der gattungsgemäßen Einrichtung erfindungsgemäß mit den kennzeichnenden Merkmalen des Anspruches 1 gelöst.

Im Folgenden ist für das leichtere Verständnis eines Fachmanns auf dem Gebiet der Kupplungsentwicklung der etablierte Sprachgebrauch für die einzelnen Bauteile einer Kupplung beibehalten worden, obwohl sich die Funktion der Bauteile wesentlich von den bisher bekannten Kupplungsarten unterscheiden kann. So ist zum Bispiel für das trennende Element im Antriebsstrang weiterhin der Begriff Ausrückträger beibehalten worden, wobei hiermit ein Einrückträger, im funktionellen Sinne, gemeint ist. Das Ausrücklager liegt als Einrücklager in der erfindungsgemäßen Kupplung vor.

Bei der erfindungsgemäßen Ansteuereinrichtung ist die Kupplung so ausgebildet, daß sie im Ruhezustand geöffnet ist. Dies wird dadurch erreicht, daß die Ansteuereinheit auf die Kupplungsfeder eine Federkraft ausübt, durch welche die Kupplungsfeder in eine die Kupplung öffnende Stellung verstellt wird. Um die Kupplung zu schließen, wird die von der Ansteuereinheit auf die Kupplungsfeder ausgeübte Federkraft so weit verringert, daß die Kupplungsfeder in eine die Kupplung schließende Stellung gelangen kann. Bei einem Verlust der Energiezufuhr wird die Kupplung der erfindungsgemäßen Ansteuereinrichtung automatisch geöffnet, wodurch das zu verbindende System vom Antrieb abgetrennt bzw. kraftlos wird. Dadurch ist eine Beschädigung der Teile des zu verbindenden Systems zuverlässig ausgeschlossen. Dabei ist die Ansteuereinrichtung konstruktiv einfach ausgebildet und hat eine kompakte Bauform, so daß sie bequem im zur Verfügung stehenden Einbauraum untergebracht werden kann. Die Ansteuereinrichtung ist zudem kostengünstig in der Herstellung und in der Montage.

Die Druckfedereinheit, ein Teil der Ansteuereinheit, die als kompaktes Tellerfederpaket ausgestaltet sein kann, ist um eine zentrale, vorzugsweise mittig platzierte Achse anordnenbar, deren genaue Dimensionen nur von dem zu übertragenden Drehmoment und der gewünschten Kraft abhängig sind. Die Druckfedereinheit trägt zur Kompaktheit der Ansteuereinrichtung und der Kupplung bei, deren Bauraum insbesondere im Kraftfahrzeug sehr beschränkt ist. Die Last wird über das Lager permanent übertragen. Damit können die übrigen Bauteile der Ansteuereinrichtung kompakter ausgelegt werden. Nur wenige Bauteile, wie das Lager und der Ausrückträger,

Der Ausrückträger ist gegen die Kraft der Druckfedereinheit verschiebbar. Diese Anordnung sorgt für eine sichere Unterbrechung. Die Kupplung bleibt im Ruhezustand im geöffneten Zustand (normally open). Die Toleranz der Kupplung kann hierdurch ausgeglichen werden. Kupplungen, insbesondere Reibkupplungen, die verschleißbehaftet sind, müssen in den bisher bekannten Ausführungen immer wieder nachstellbar sein. Der Verschleiß muss kompensierbar sein. Bei der erfindungsgemäßen Einrichtung fallen die Toleranzen nicht in das Gewicht, sie werden durch den Ruhezustand (normally open) und die Druckfedereinheit automatisch ausgeglichen.

Der Ausrückträger ist mit wenigstens einem Kolben verschiebbar. Der Kolben kann hydraulisch betätigt werden. Mittels der Hydraulik können in kleinen Volumen hohe Kräfte übertragen werden. Die Kräfte sind leicht einprägbar.

Wenn der Kolben ein Ringkolben ist, kann er leicht gegenüber der Umwelt mit Ringdichtungen abgedichtet werden. Die Dichtungen, z. B. zwei parallele Dichtungen, verhindern das Durchnässen oder Durchschwitzen des Hydraulikmediums auf den Ausrückträger.

Der Ringkolben kann koaxial zur Druckfedereinheit liegen. Die Druckfedereinheit und der Ringkolben entfalten die Kräfte in entgegengesetzte Richtungen, aber parallel. Sie greifen mit sehr kurzen Hebelwegen an. Durch die geringen Hebelarme weisen die Kraftangriffspunkte geringe Differenzen auf. Die Parallelität der Kräfte sorgen für eine geringe Verspannung und ein geringes Biegemoment der einzelnen Bauteile der Einrichtung, insbesondere des Ausrücklagers.

Der Kolben steht bei geöffneter Kupplung unter Federkraft. Der Kolben muss unter Mediumsdruck stehen, wenn die Kupplung geschlossen sein soll. Nach einem weiteren Aspekt der Erfindung sorgen die genannten Abhängigkeiten für eine sichere Unterbrechung der Antriebswelle von der Abtriebswelle. Die sichere Unterbrechung verhindert ein Zerstören der Bauteile und des Antriebstrangs des Kraftfahrzeugs.

Die Ansteuereinheit kann mit einem Wegaufnehmer ausgestattet sein. Der Wegaufnehmer arbeitet elektrisch oder elektronisch. Die elektrischen Kontakte des Wegaufnehmers, ein Wegsensor oder ein Magnet, können an ein Fahrzeugsteuergerät angeschlossen werden. Mit der elektrischen und elektronischen Auswertung des Signals des Wegsensors kann sowohl bestimmt werden, ob die Kupplung geöffnet oder geschlossen ist und durch eine geeignete Ansteuerung eines Kupplungsventils oder des Kolbens kann die Kupplung soweit geschlossen werden, dass ein ganz bestimmtes Drehmoment durch die Kupplung übertragen wird.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: im Axialschnitt eine als Ausrückzylinder ausgebildete Ansteuereinheit der erfindungsgemäßen Ansteuereinrichtung,
- Fig. 2: im Axialschnitt und in schematischer Darstellung eine Kupplung mit der Ansteuereinheit gemäß Fig. 1 in geöffneter Stellung,
- Fig. 3: in einer Darstellung entsprechend Fig. 2 die Kupplung in geschlossenem Zustand,

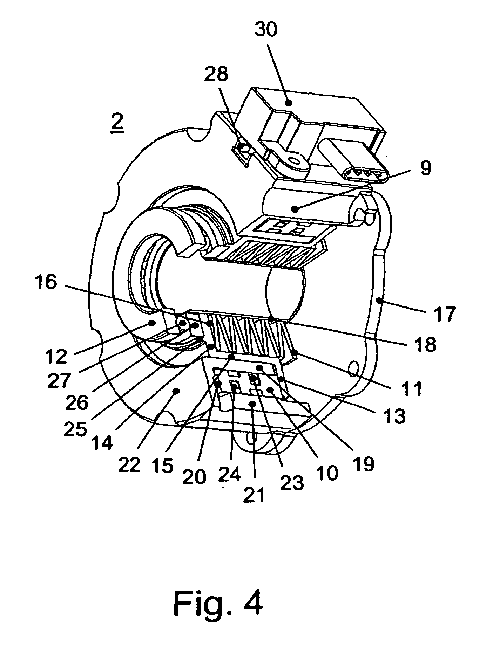

- Fig.4: eine 3-D-Darstellung einer erfindungsgemäßen Ansteuereinheit aus ca. 30° gedrehter Ansicht, wobei der Kolben unbetätigt ist,

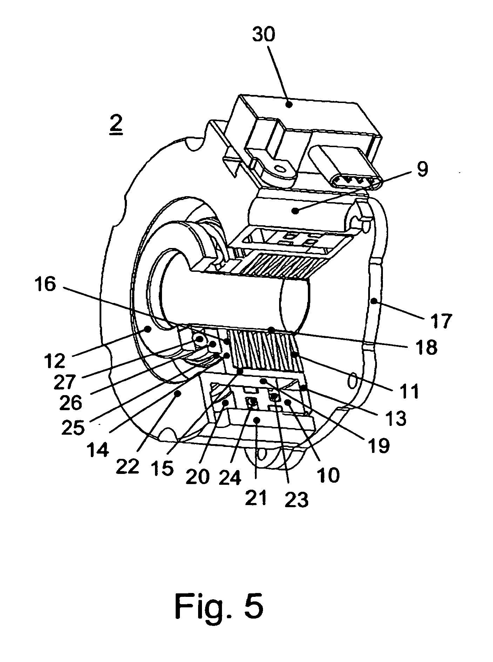

- Fig. 5: eine 3-D-Darstellung einer Ansteuereinheit nach Fig. 4, aus einer um ca. 30° gedrehten Ansicht, wobei der Kolben betätigt ist,

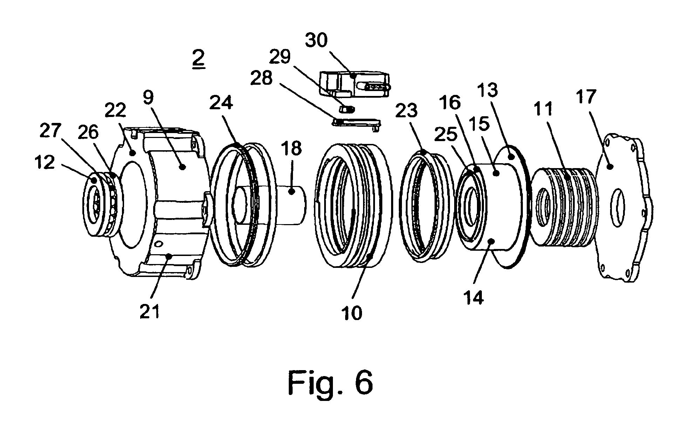

- Fig. 6: die Ansteuereinheit nach Fig. 4 in ihren einzelnen Teilen als Explosionsdarstellung.

Die hydraulische Ansteuereinrichtung hat eine Kupplung 1, die durch eine als Ausrückzylinder ausgebildete Ansteuereinheit 2 betätigt wird. Die Kupplung 1 ist in bekannter Weise ausgebildet und wird darum nur kurz erläutert. Sie hat ein drehfest mit einer Motorwelle 3 verbundenes Gehäuse 4, in dem ringförmige Reibbeläge 5, 6 untergebracht sind. Die Reibbeläge 5, 6 können durch eine Kupplungsfeder 7 zusammengedrückt werden, um auf diese Weise die Motorwelle 3 mit einer Getriebewelle 8 drehfest zu verbinden. Die Kupplung ist in diesem Falle geschlossen.

Zur Betätigung der Kupplungsfeder 7 ist der Ausrückzylinder 2 vorgesehen, der getriebeseitig ortsfest angeordnet ist. Er hat ein Gehäuse 9, in dem ein Ringkolben 10 axial verschieblich untergebracht ist. Er umgibt ein Tellerfederpaket 11, mit dem ein Ausrücklager 12 axial belastet wird.

Der Ringkolben 10 liegt mit einer Stirnseite an einem radial nach außen gerichteten Flansch 13 eines Ausrückträgers 14 an, dessen zylindrischer Mantel 15 das Tellerfederpaket 11 umgibt und es radial zentriert. An den Mantel 15 schließt der Flansch 13 an einem Ende und ein radial nach innen gerichteter Flansch 16 am anderen Ende an. Das Tellerfederpaket 11 stützt sich mit einem Ende an einem radialen Deckel 17 des Gehäuses 9 und mit dem anderen Ende am radial nach innen gerichteten Flansch 16 des Ausrückträgers 14 ab. Der Flansch 16 reicht bis nahe an ein zentrales Führungsrohr 18, mit dem das Tellerfederpaket 11 radial innen zentriert wird und durch das die Getriebewelle 8 ragt.

Der Mantel 15 des Ausrückträgers 14 liegt mit seiner äußeren Mantelfläche an einer koaxial zum Ringkolben 10 liegenden Ringwand 19 an, die einen Druckraum 20 radial nach innen begrenzt, der ringförmig ausgebildet und radial nach außen durch einen zylindrischen Mantel 21 des Gehäuses 9 begrenzt ist. Der Gehäusemantel 21 ist über einen radial verlaufenden Boden 22 mit der Ringwand 19 verbunden.

Der Ringkolben 10 ist radial außen an der Innenwand des Gehäusemantels 21 und radial innen an der Innenseite der Ringwand 19 axial geführt und gegenüber beiden Seiten durch jeweils wenigstens eine Dichtung 23, 24 abgedichtet.

Der Flansch 16 des Ausrückträgers 14 weist an seiner dem Ausrücklager 12 zugewandten Stirnseite einen ringförmigen Ansatz 25 auf, mit dem er eine ringförmige Lagerscheibe 26 umgibt und sie radial zentriert. Sie ist mit dem Ausrückträger 14 fest verbunden und dient zur Abstützung von Lagerkörpern 27, die im Ausführungsbeispiel Lagerkugeln sind, die zwischen der Lagerscheibe 26 und dem ringscheibenförmigen Ausrücklager 12 angeordnet sind.

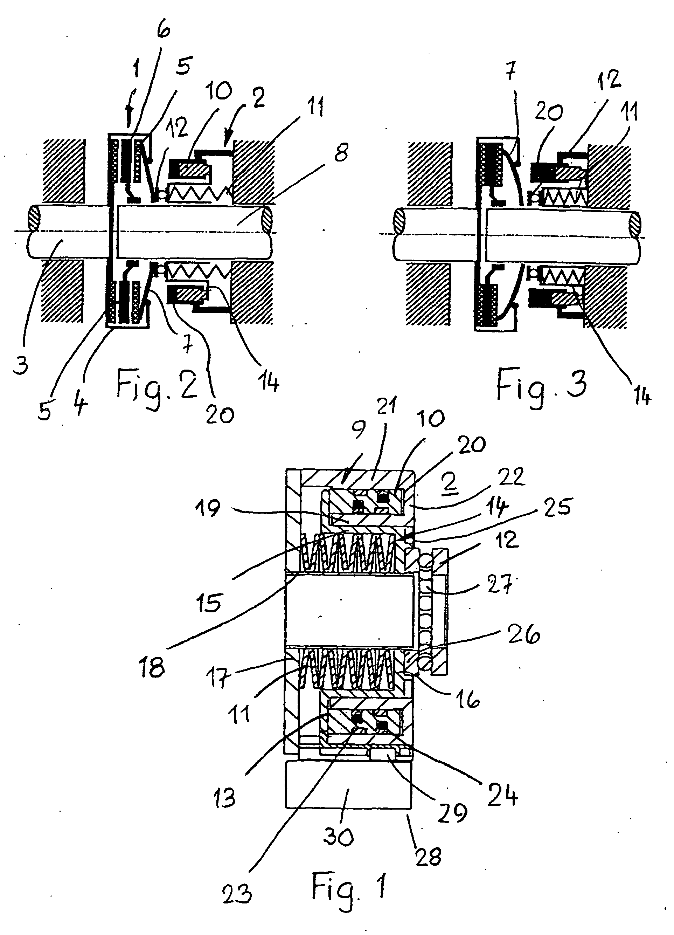

Ist der Druckraum 20 drucklos, drückt das Tellerfederpaket 11 den Ausrückträger 14 und damit den Ringkolben 10 in die in Fig. 1 dargestellte Endlage, in welcher der Flansch 13 des Ausrückträgers 14 am freien Ende der Ringwand 19 des Zylindergehäuses 9 anliegt. Das Ausrücklager 12 steht in dieser Lage über den Gehäuseboden 22 vor.

Wie sich aus Fig. 2 ergibt, ist die Kraft des Tellerfederpaketes 11 größer als die Kraft der Kupplungsfeder 7. Das Ausrücklager 12 drückt unter der Kraft des Tellerfederpaketes 11 so auf die Kupplungsfeder 7, daß diese elastisch so verformt wird, daß die Reibbeläge 5, 6 der Kupplung 1 außer Eingriff sind. Die Kupplung ist somit geöffnet, wenn der Zylinder 2 drucklos ist.

Um die Kupplung 1 zu schließen (Fig. 3), wird in den Druckraum 20 Druckmedium eingebracht. Dadurch wird der Ringkolben 10 gegen die Kraft des Tellerfederpaketes 11 verschoben. Der Ringkolben 10 nimmt den Ausrückträger 14 mit, wodurch das Ausrücklager 12 entsprechend zurückgeschoben wird und die Kupplungsfeder 7 so weit freigibt, daß sie die Reibbeläge 5, 6 im Kupplungsgehäuse 4 in Reibkontakt bringt. Im dargestellten Ausführungsbeispiel hebt das Ausrücklager 12 von der Kupplungsfeder 7 ab. Die Kupplung 1 nimmt so lange ihre geschlossene Stellung ein, wie der Druckraum 20 unter Druck gesetzt und somit der Ausrückzylinder 2 druckbeaufschlagt ist. Die Kupplung 1 ist somit nur dann geschlossen, wenn über den hydraulischen Ausrückzylinder 2 eine entsprechende Druckkraft auf das Tellerfederpaket 11 ausgeübt wird.

Um einen Schalt- oder einen Anfahrvorgang zu ermöglichen, wird der Druck im Druckraum 20 unter den zur Erzeugung der Schließkraft erforderlichen Wert gesenkt, wodurch der Ausrückträger 14 unter der Kraft des Tellerfederpaketes 11 den Ringkolben 10 zurückschiebt und das Ausrücklager 12 die Kupplungsfeder 7 wieder verformt. Die Reibbeläge 6, 7 kommen auf diese Weise wieder außer Eingriff voneinander, so daß die Kupplung 1 geöffnet wird (Fig. 2). Durch Erhöhen des Druckes im Druckraum 20 kann die Kupplung in der beschriebenen Weise auch wieder geschlossen werden. Mit der beschriebenen hydraulischen Ansteuerung kann auch die Momentenübertragung an den Reibbelägen 5, 6 leicht und zuverlässig geregelt werden.

Um die Position des Ringkolbens 10 erfassen zu können, kann an der Außenseite des Ausrückzylinders 2 ein Wegaufnehmer 28 (Fig. 1) angeordnet sein. Der Wegaufnehmer 28 ist in bekannter Weise ausgebildet und hat wenigstens einen mit dem Ausrückträger 14 fest verbundenen Magneten 29 sowie einen ortsfesten Wegsensor 30. Die Lage des Magneten 29 kennzeichnet die Lage des Ringkolbens 10 und damit des Ausrückträgers 14. Ober den Wegaufnehmer 28 kann somit sehr einfach die Position des Ringkolbens 10 erfaßt werden, falls dies für eine Regelung notwendig sein sollte.

Sollte der Hydraulikdruck im Druckraum 20 beispielsweise durch eine Fehlfunktion im Hydrauliksystem, unter einen bestimmten Wert fallen, öffnet die Kupplung 1 automatisch, da das Tellerfederpaket 11 die Kupplungsfeder 7 so verformt, daß die Kupplung 1 geöffnet wird (Fig. 2). Dadurch wird der Kraftfluß zuverlässig zum Antrieb getrennt, so daß eine Beschädigung der Kupplung 1 und/oder von Motorteilen zuverlässig verhindert wird.

Die beschriebene Ansteuerung der Kupplung 1 wird bevorzugt in automatisierten Schaltgetrieben für Fahrzeuge eingesetzt. Die Ansteuerung ist konstruktiv einfach ausgebildet und benötigt nur geringen Einbauraum. Da die Kupplung 1 bei einer Fehlfunktion automatisch öffnet, wird das zu verbindende System zuverlässig abgetrennt bzw. kraftlos. Sie ist auch bei Hybridantriebssträngen, bei denen der eine oder andere Antrieb abzukuppeln ist, verwendbar.

Anstelle des Tellerfederpaketes 11 kann auch jede andere geeignete Federeinrichtung eingesetzt werden. Sie muß lediglich so eingestellt werden, daß ihre Druckkraft größer ist als die Gegenkraft der Kupplungsfeder 7.

### Bezugszeichenliste:

| Bezugszeichen | Bezeichnung |
|---|---|
| 1 | Kupplung |
| 2 | Ansteuereinheit, hier in Form eines Ausrückzylinders |
| 3 | Motorwelle |
| 4 | Kupplungsgehäuse |
| 5 | Reibbelag |
| 6 | Reibbelag |
| 7 | Kupplungsfeder |
| 8 | Getriebewelle |
| 9 | Gehäuse |
| 10 | Kolben bzw. Ringkolben |
| 11 | Druckfedereinheit, hier in Form eines Tellerfederpakets |
| 12 | Ausrücklager |
| 13 | Flansch |
| 14 | Ausrückträger |
| 15 | Mantel |
| 16 | Flansch |
| 17 | Deckel |
| 18 | Führungsrohr |
| 19 | Ringwand |
| 20 | Druckraum |
| 21 | Mantel bzw. Gehäusemantel |
| 22 | Boden bzw. Gehäuseboden |
| 23 | Dichtung |
| 24 | Dichtung |
| 25 | Ansatz |
| 26 | Lagerscheibe |
| 27 | Lagerkörper |
| 28 | Wegaufnehmer |
| 29 | Magnet |
| 30 | Wegsensor |

## Patentansprüche

1. Einrichtung für einen Antriebsstrang, umfassend eine Kupplung (1) von Fahrzeugen, vorzugsweise von Kraftfahrzeugen, mit einer Kupplungsfeder (7), mit der Reibelemente (5, 6) in und außer Reibkontakt bringbar sind, um ein antreibendes (3) und ein abtreibendes. Teil (8) miteinander zu kuppeln bzw. zu entkuppeln, und mit einer Ansteuereinheit (2), mit der die Kupplungsfeder (7) der Art betätigbar ist, dass die Ansteuereinheit (2) auf die Kupplungsfeder (7) eine Federkraft ausübt, durch die die Kupplungsfeder (7) in eine die Kupplung (1) öffnende Stellung verstellbar ist,
wobei die Ansteuereinheit (2) so ausgebildet ist, dass die Kupplung (1) im Ruhezustand geöffnet ist, wobei die Kupplung Unterschreitung einer hydraulischen Energiezufuhr über einen Ringkolben (10) der Ansteuereinheit (2) automatisch geöffnet wird
**dadurch gekennzeichnet, dass**
die Ansteuereinheit (2) eine Druckfedereinheit (11) aufweist, die von dem Ringkolben (10) umgeben wird.

2. Einrichtung nach Anspruch 1,
**dadurch gekennzeichnet, daß** die Druckfedereinheit (11) ein Tellerfederpaket ist.

3. Einrichtung nach Anspruch 2,
**dadurch gekennzeichnet, daß** die Druckfedereinheit (11) an einem Ausrückträger (14) angreift.

4. Einrichtung nach Anspruch 3,
**dadurch gekennzeichnet, daß** der Ausrückträger (14) ein die Kupplungsfeder (7) verstellendes Ausrücklager (12) aufweist.

5. Einrichtung nach Anspruch 3 oder 4,
**dadurch gekennzeichnet, daß** der Ausrückträger (14) gegen die Kraft der Druckfedereinheit (11) verschiebbar ist.

6. Einrichtung nach einem der Ansprüche 3 bis 5,
**dadurch gekennzeichnet, daß** der Ausrückträger (14) mit wenigstens einem Kolben (10) verschiebbar ist.

7. Einrichtung nach einem der vorhergehenden Ansprüche,
**dadurch gekennzeichnet, daß** der Ringkolben (10) koaxial zur Druckfedereinheit (11) liegt.

8. Einrichtung nach einem der Ansprüche 6 bis 7,
**dadurch gekennzeichnet, daß** der Kolben (10) durch Hydraulikmedium verschiebbar ist.

9. Einrichtung nach einem der Ansprüche 6 bis 8,
**dadurch gekennzeichnet, daß** der Kolben (10) bei geschlossener Kupplung (1) unter Mediumsdruck steht.

10. Einrichtung nach einem der Ansprüche 6 bis 9,
**dadurch gekennzeichnet, daß** der Kolben (10) bei geöffneter Kupplung (1) unter Federkraft steht.

11. Einrichtung nach einem der Ansprüche 1 bis 10,
**dadurch gekennzeichnet, daß** der Ansteuereinheit (2) ein Wegaufnehmer (28) zugeordnet ist.

12. Einrichtung nach Anspruch 11,
**dadurch gekennzeichnet, daß** der Wegaufnehmer (28) wenigstens einen Magneten (29) und einen Wegsensor (30) aufweist.

13. Antriebstrang eines Kraftfahrzeugs mit einer Einrichtung nach den Ansprüchen 1 bis 12.

## Claims

1. Device for a drive train, comprising a clutch (1) of vehicles, preferably of motor vehicles, having a clutch spring (7), by which friction elements (5, 6) are bringable into and out of frictional contact in order to couple and uncouple an input part (3) and an output part (8), and having a control unit (2), by which the clutch spring (7) is actuable in that the control unit (2) exerts on the clutch spring (7) a spring force, by means of which the clutch spring (7) is displaceable into a position opening the clutch (1),
wherein the control unit (2) is so designed that the clutch (1) in the inoperative state is open, wherein the clutch is automatically opened upon undershooting of a hydraulic energy supply by an annular piston (10) of the control unit (2),
**characterized in that**
the control unit (2) comprises a compression spring unit (11), which is surrounded by the annular piston (10).

2. Device according to claim 1,
**characterized in that** the compression spring unit (11) is a cup-spring assembly.

3. Device according to claim 2,
**characterized in that** the compression spring unit (11) acts on a clutch release carrier (14).

4. Device according to claim 3,
**characterized in that** the clutch release carrier (14) comprises a release bearing (12), which displaces the clutch spring (7).

5. Device according to claim 3 or 4,
**characterized in that** the clutch release carrier (14) is displaceable counter to the force of the compression spring unit (11) .

6. Device according to one of claims 3 to 5,
**characterized in that** the clutch release carrier (14) is displaceable by means of at least one piston (10).

7. Device according to one of the preceding claims,
**characterized in that** the annular piston (10) is situated coaxially with the compression spring unit (11).

8. Device according to one of claims 6 to 7,
**characterized in that** the piston (10) is displaceable by hydraulic medium.

9. Device according to one of claims 6 to 8,
**characterized in that** the piston (10) in the closed state of the clutch (1) is under medium pressure.

10. Device according to one of claims 6 to 9,
**characterized in that** the piston (10) in the open state of the clutch (1) is subject to spring force.

11. Device according to one of claims 1 to 10,
**characterized in that** a position pickup (28) is associated with the control unit (2).

12. Device according to claim 11,
**characterized in that** the position pickup (28) comprises at least one magnet (29) and a displacement sensor (30).

13. Drive train of a motor vehicle having a device according to claims 1 to 12.

## Revendications

1. Dispositif pour un groupe motopropulseur, comprenant un embrayage (1) de véhicule, de préférence de véhicule automobile, avec un ressort d'embrayage (7) pouvant être mis en contact par friction avec des éléments de friction (5, 6) ou en être séparé, pour coupler et/ou découpler une partie d'entraînement d'entrée (3) et une partie d'entraînement de sortie (8) et avec une unité de commande (2) permettant d'actionner le ressort d'embrayage (7) de manière à ce que l'unité de commande (2) exerce une force élastique sur le ressort d'embrayage (7) permettant d'amener le ressort d'embrayage (7) dans une position d'ouverture de l'embrayage (1),
l'unité de commande (2) étant configurée de manière à ce que l'embrayage (1) soit ouvert à l'état de repos, l'embrayage étant automatiquement ouvert en cas de passage en dessous d'un certain niveau d'alimentation en énergie hydraulique via un piston annulaire (10) de l'unité de commande (2), **caractérisé en ce que**
l'unité de commande (2) présente une unité de ressort de compression (11) entourée par le piston annulaire (10).

2. Dispositif selon la revendication 1, **caractérisé en ce que** l'unité de ressort de compression (11) est un groupe de ressorts à diaphragme.

3. Dispositif selon la revendication 2, **caractérisé en ce que** l'unité, de ressort de compression (11) entraîne un support de débrayage (14).

4. Dispositif selon la revendication 3, **caractérisé en ce que** le support de débrayage (14) présente un palier de débrayage (12) déplaçant un ressort d'embrayage (7).

5. Dispositif selon la revendication 3 ou 4, **caractérisé en ce que** le support de débrayage (14) peut être déplacé par la force-de l'unité de ressort de compression (11).

6. Dispositif selon l'une quelconque des revendications 3 à 5, **caractérisé en ce que** le support de débrayage (14) peut être déplacé par au moins un piston (10).

7. Dispositif selon l'une quelconque des revendications précédentes, **caractérisé en ce que** le piston annulaire (10) est disposé coaxialement par rapport à l'unité de ressort de compression (11).

8. Dispositif selon l'une quelconque des revendications 6 à 7, **caractérisé en ce que** le piston (10) peut être déplacé avec un liquide hydraulique.

9. Dispositif selon l'une quelconque des revendications 6 à 8, **caractérisé en ce que** le piston (10) est sous pression liquide lorsque l'embrayage (1) est fermé.

10. Dispositif selon l'une quelconque des revendications 6 à 9, **caractérisé en ce que** le piston (10) est sous pression élastique lorsque l'embrayage (1) est ouvert.

11. Dispositif selon l'une quelconque des revendications 1 à 10, **caractérisé en ce que** l'unité de commande (2) est associée à un dispositif de détection de course (28).

12. Dispositif selon la revendication 11, **caractérisé en ce que** le dispositif de détection de course (28) présente au moins un aimant (29) et un capteur de course (30).

13. Groupe motopropulseur de véhicule automobile avec un dispositif selon les revendications 1 à 12.
